(19)

**Europäisches Patentamt**
**European Patent Office**
**Office européen des brevets**

(11) **EP 4 128 154 B1**

(12) # EUROPEAN PATENT SPECIFICATION

(45) Date of publication and mention
of the grant of the patent:
**25.02.2026  Bulletin 2026/09**

(21) Application number: **21803706.7**

(22) Date of filing: **13.05.2021**

(51) International Patent Classification (IPC):
**G06T 7/269** $^{(2017.01)}$

(52) Cooperative Patent Classification (CPC):
**G06T 7/269;** G06T 2207/10016; G06T 2207/10024;
G06T 2207/20081; G06T 2207/20084;
G06T 2207/30201

(86) International application number:
**PCT/CN2021/093497**

(87) International publication number:
**WO 2021/228172 (18.11.2021 Gazette 2021/46)**

(54) **THREE-DIMENSIONAL MOTION ESTIMATION**

DREIDIMENSIONALE BEWEGUNGSSCHÄTZUNG

ESTIMATION DE MOUVEMENT TRIDIMENSIONNEL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **13.05.2020  GB 202007065**

(43) Date of publication of application:
**08.02.2023  Bulletin 2023/06**

(73) Proprietor: **Huawei Technologies Co., Ltd.
Shenzhen, Guangdong 518129, (CN)**

(72) Inventors:
• **KOUJAN, Rami**
**London W12 0BZ (GB)**
• **ROUSSOS, Anastasios**
**London W12 0BZ (GB)**
• **ZAFEIROU, Stefanos**
**London W12 0BZ (GB)**

(74) Representative: **Maiwald GmbH
Engineering
Elisenhof
Elisenstrasse 3
80335 München (DE)**

(56) References cited:
**CN-A- 108 932 725      US-A1- 2019 050 998
US-A1- 2020 084 427**

• ZHICHAO YIN ET AL: "GeoNet: Unsupervised
Learning of Dense Depth, Optical Flow and
Camera Pose", ARXIV.ORG, CORNELL
UNIVERSITY LIBRARY, 201 OLIN LIBRARY
CORNELL UNIVERSITY ITHACA, NY 14853, 6
March 2018 (2018-03-06), XP080858377
• BEHL ASEEM ET AL: "Bounding Boxes,
Segmentations and Object Coordinates: How
Important is Recognition for 3D Scene Flow
Estimation in Autonomous Driving Scenarios?",
2017 IEEE INTERNATIONAL CONFERENCE ON
COMPUTER VISION (ICCV), IEEE, 22 October
2017 (2017-10-22), pages 2593 - 2602,
XP033283124, DOI: 10.1109/ICCV.2017.281
• WU YUHANG; KAKADIARIS IOANNIS A.: "3-D
Face Alignment Using A Convolutional Point-Set
Representation", IEEE TRANSACTIONS ON
BIOMETRICS, BEHAVIOR, AND IDENTITY
SCIENCE, IEEE, vol. 1, no. 4, 1 October 2019
(2019-10-01), pages 264 - 277, XP011756152, DOI:
10.1109/TBIOM.2019.2944472
• VOGEL CHRISTOPH; SCHINDLER KONRAD;
ROTH STEFAN: "3D Scene Flow Estimation with
a Piecewise Rigid Scene Model",
INTERNATIONAL JOURNAL OF COMPUTER
VISION., KLUWER ACADEMIC PUBLISHERS,
NORWELL., US, vol. 115, no. 1, 24 February 2015
(2015-02-24), US
, pages 1 - 28, XP035538001, ISSN: 0920-5691,
DOI: 10.1007/s11263-015-0806-0

EP 4 128 154 B1

**Description**

**Field of the Invention**

The specification relates to methods and systems for estimating three-dimensional motion flow between two-dimensional images, in particular to estimating the three-dimensional motion flow of an object, such as a face, between two-dimensional images.

**Background**

Optical flow estimation is a challenging computer vision problem in which the two-dimensional motion/flow of an object between two images is estimated. Its three-dimensional counterpart (i.e. estimating the three-dimensional motion of scene points at different times in three dimensional space from two-dimensional images), scene flow, presents an even more formidable problem, but has numerous important applications, including three-dimensional facial reconstruction, autonomous driving, action recognition, human motion and head pose estimation and video-to-video translation.

Scene flow combines the challenges of three-dimensional shape reconstruction and dense flow estimation and, due to factors including depth ambiguity and the aperture problem, is a highly ill posed problem. Current methods typically rely on stereoscopic or RGB-D images, and enforce priors on either the smoothness of the reconstructed surfaces and estimated motion fields or the rigidity of the motion in order to solve the problem.

ZHICHAO YIN ET AL: "GeoNet: Unsupervised Learning of Dense Depth, Optical Flow and Camera Pose", ARXIV.ORG, CORNELL UNIVERSITY LIBRARY, 201 OLIN LIBRARY CORNELL UNIVERSITY ITHACA, NY 14853, 6 March 2018, describes GeoNet, a jointly unsupervised learning framework for monocular depth, optical flow and ego motion estimation from videos.

**Summary**

The invention is set out in the appended independent claims, wherein further embodiments are set out in the appended dependent claims.

According to a first aspect of this specification, there is described a computer implemented method of estimating a three-dimensional flow of an object between a first two-dimensional image comprising an image of the object in a first configuration and a second two-dimensional image comprising an image of the object in a second configuration. The method comprises: inputting the first image two-dimensional, the second image two-dimensional and a two-dimensional representation of an estimated three-dimensional shape of the object into a convolutional neural network; and generating, using the convolutional neural network, the three-dimensional flow of the object between the first two-dimensional image and the second two-dimensional image from the first two-dimensional image, the second two-dimensional image and the two-dimensional representation of the estimated three-dimensional shape of the object.

The two-dimensional representation of the estimated three-dimensional shape of the object may comprise a colour image, wherein pixels of the colour image encode three dimensional coordinates of points in the estimated three-dimensional shape of the object that correspond to pixels of the object in the first two-dimensional image.

The two-dimensional representation of the estimated three-dimensional shape of the object comprises a projected normalised coordinates code.

The three-dimensional flow of the object between a first two-dimensional image and the second two-dimensional image may comprise a colour image encoding a three-dimensional flow of pixels between the first two-dimensional image and the second two-dimensional image.

The convolutional neural network may comprise: a first input branch configured to process the first two-dimensional image through one or more convolutional layers; a second input branch configured to process the second two-dimensional image through one or more convolutional layers; a third input branch configured to process the two-dimensional representation of the estimated three-dimensional shape of the object through one or more convolutional layers; and a trunk network configured to jointly process output derived from the first input branch, the second input branch and the third input branch through a plurality of convolutional layers. The convolutional neural network may further comprise a correlation layer configured to correlate output of the first branch and output of the second branch prior to processing by the trunk network. The trunk network may comprise: an encoding section configured to generate a coarse feature map from the output derived from the first input branch, the second input branch and the third input branch using a plurality of convolutional layers; and a decoding section configured to generate the three-dimensional flow of the object between a first two-dimensional image and the second two-dimensional image from the coarse feature map using a plurality of deconvolutional layers.

The method further comprises generating, using a further neural network, the two-dimensional representation of the estimated three-dimensional shape of the object from the first image prior to inputting the two-dimensional representation of the estimated three-dimensional shape of the object into the convolutional neural network. Generating the two-dimensional representation of an estimated three-dimensional shape of the object from the first image may comprise: generating, using the further neural network, the estimated three-dimensional shape of the object from the first image; and encoding three dimensional coordinates of points in the estimated three-dimensional shape in a two-dimensional image to generate the two-dimensional representation of an estimated three-dimensional shape of the object.

The object may be a face.

According to a further aspect of this specification, which is not covered by the claims, there is described a computer implemented method of training a convolutional neural network to estimate a three-dimensional flow of an object between a first two-dimensional image comprising an image of the object in a first configuration and a second two-dimensional image comprising an image of the object in a second configuration. The method comprises: inputting the first image two-dimensional, the second image two-dimensional and a two-dimensional representation of an estimated three-dimensional shape of the object into a convolutional neural network; generating, using the convolutional neural network, the three-dimensional flow of the object between the first two-dimensional image and the second two-dimensional image from the first two-dimensional image, the second two-dimensional image and the two-dimensional representation of the estimated three-dimensional shape of the object; comparing the generated three-dimensional flow to a ground truth three-dimensional flow between the first two-dimensional image and the second two-dimensional image using an objective function; and updating parameters of the convolutional neural network in dependence on the comparison.

The objective function may comprise an endpoint error term based on a difference between the generated three-dimensional flow and the ground truth three-dimensional flow between the first two-dimensional image and the second two-dimensional image. Generating, using the convolutional neural network, the three-dimensional flow of the object between the first two-dimensional image and the second two-dimensional image may comprise generating a series of three-dimensional flows at different resolutions. The endpoint error term may further compare the generated series of three-dimensional flows at different resolutions to a corresponding series of ground truth three dimensional flows at different resolutions. The series of ground truth three dimensional flows at different resolutions may be derived from the ground truth three dimensional flow between the first two-dimensional image and the second two-dimensional image, for example by downsampling.

The objective function may comprise a photo-consistency error comparing pixel values sampled from the second two-dimensional image to pixel values in the first two-dimensional image. The pixel values in the second two-dimensional image may be sampled based on a warping of the two-dimensional representation of the estimated three-dimensional shape of the object using the generated three-dimensional flow of the object between the first two-dimensional image and the second two-dimensional image.

The two-dimensional representation of the estimated three-dimensional shape of the object may comprise a colour image. Pixels of the colour image may encode three-dimensional coordinates of points in the estimated three-dimensional shape of the object that correspond to pixels of the object in the first two-dimensional image.

The three-dimensional flow of the object between a first two-dimensional image and the second two-dimensional image may comprise a colour image encoding a three-dimensional flow of pixels between the first two-dimensional image and the second two-dimensional image.

The convolutional neural network may comprise: a first input branch configured to process the first two-dimensional image through one or more convolutional layers; a second input branch configured to process the second two-dimensional image through one or more convolutional layers; a third input branch configured to process the two-dimensional representation of the estimated three-dimensional shape of the object through one or more convolutional layers; and a trunk network configured to jointly process output derived from the first input branch, the second input branch and the third input branch through a plurality of convolutional layers.

The method further comprises generating, using a further neural network, the two-dimensional representation of the estimated three-dimensional shape of the object from the first image prior to inputting the two-dimensional representation of the estimated three-dimensional shape of the object into the convolutional neural network.

The object may be a face.

According to a further aspect of this specification, which is not covered by the claims, there is described a computer implemented method of estimating a three-dimensional flow of an object between a first two-dimensional image comprising an image of the object in a first configuration and a second two-dimensional image comprising an image of the object in a second configuration, the method comprising the use of a neural network trained according to any of training methods disclosed herein.

According to a further aspect of this specification, which is not covered by the claims, there is described a computer implemented method of generating a training dataset for use in training a model to estimate a three-dimensional flow of an object between a first two-dimensional image comprising an image of the object in a first configuration and a second two-dimensional image comprising an image of the object in a second configuration. The method comprises: extracting a plurality of frames from a section of video data, each frame comprising an image of an object of a predefined type; for each extracted frame, fitting a three-dimensional model of an object of the predefined type to the image of the object in the frame; for a plurality of pairs of frames, generating the three-dimensional flow from the corresponding fitted three dimensional models of the object for each of the frames in the pair; and storing the extracted frames and each of the generated three-dimensional flows in a memory along with an association of the generated three-dimensional flow with the corresponding pair of extracted frames from which it was generated.

The three-dimensional flows may each comprise a colour image, wherein pixels of the colour image encode a three dimensional flow of points in a first frame in the pair to a second frame in the pair.

According to a further aspect of this specification, which is not covered by the claims there is described a computer implemented method of training a convolutional neural network to estimate a three-dimensional flow of an object between a first two-dimensional image comprising an image of the object in a first configuration and a second two-dimensional image comprising an image of the object in a second configuration, the method comprising the use of a dataset generated according to any of the dataset creation methods disclosed herein.

According to a further aspect of this specification, there is described a system comprising one or more processors and a memory, the memory comprising computer readable code that, when executed by the one or more processors, causes the system to perform the method of the first aspect.

According to a further aspect of this specification, there is described a computer program product comprising computer readable code that, when executed by computing apparatus, causes the computing apparatus to perform the method of the first aspect.

## Brief Description of the Drawings

Embodiments will now be described by way of non-limiting examples with reference to the accompanying drawings, in which:

FIG. 1 shows an overview of an example of generating an estimate of a three-dimensional flow between two images;

FIG. 2 shows a flow diagram of an example method of generating an estimate of a three-dimensional flow between two images;

FIG. 3 shows an overview of a further example of generating an estimate of a three-dimensional flow between two images;

FIG. 4 shows a flow diagram of a further example method of generating an estimate of a three-dimensional flow between two images;

FIG. 5 shows an example of a structure of a neural network for estimating a three-dimensional flow between two images;

FIG. 6 shows a further example of a structure of a neural network for estimating a three-dimensional flow between two images;

FIG. 7 shows a schematic overview of a method 700 of training a neural network to estimate of a three-dimensional flow between two images;

FIG. 8 shows an example of a training schedule 800 for training a neural network to estimate of a three-dimensional flow between two images;

FIG. 9 shows a flow chart of an example method 900 of training a neural network to estimate of a three-dimensional flow between two images;

FIG. 10 shows an example of a method 1000 for generating ground truth training data for use in training a neural network to estimate of a 3D flow of an object between two images;

FIG. 11 shows an example of a method 1100 for training a neural network to generate the 3D shape of an object from a 2D image;

FIG. 12 shows a schematic example of a system/apparatus for performing any of the methods described herein.

## Detailed Description

The methods and systems described herein seek to estimate a three-dimensional (3D) motion field of an object from pairs of monocular two-dimensional (2D) images containing the object, i.e. perform scene flow estimation. A convolutional neural network is used to estimate a 3D flow of an object from a pair of 2D images, each comprising an image of the object in a different configuration (e.g. pose, position/location, expression, orientation etc. Collectively, these may also be referred to as a "capture setup"), and an estimated three-dimensional shape of the object derived from one of the images.

In the following, example methods and systems are described and illustrated in relation to facial images (i.e. images comprising one or more faces). However, it will be appreciated that the methods and systems may alternatively be applied to other objects in two-dimensional images, such as, for example: vehicles; human bodies; buildings; landscapes; animals and/or natural phenomena.

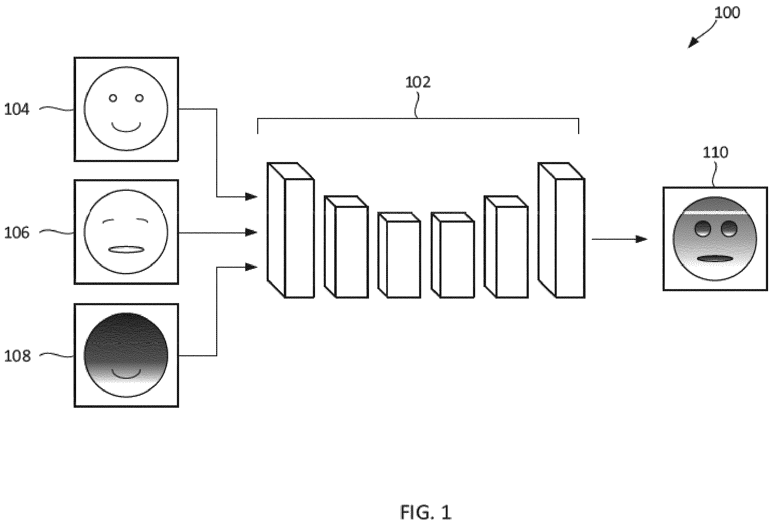

FIG. 1 shows an overview of an example method 100 of generating an estimate of a three-dimensional flow of an object between two images. A convolutional neural network 102 receives as input a first 2D image 104 comprising an image of an object in a first configuration (in this example a facial image with a first expression), a second 2D image 106 comprising the image of an object in a second configuration (in this example a facial image with a second expression), and a 2D representation of an estimated 3D shape of the object 108. The convolutional neural network 102 processes the inputs through a plurality of neural network layers to generate an estimated 3D flow 110 of the object between the first 2D image 104 and the second 2D image 106. The use of the estimated 3D shape of the object 108 as an input in addition to the two 2D images 104, 106 allows the method to produce accurate 3D flows between images without the need to use stereographic or RGB-D images, which are difficult or impossible to capture in-the-wild. The inclusion of such images allows the CNN to better associate each pixel value in the first 2D image 104 with a corresponding point in 3D space, providing the network with a better initialisation in the problem space and establishing a reference 3D mesh that facilitates warping in the 3D space during the course of training/inference.

The first 2D image, $I_1$, 104 and second 2D image, $I_2$, 106 each comprises a set of pixel values in a 2D array. For example, in a colour image $I_1$, $I_2 = \mathbb{R}^{H \times W \times 3}$ , where $H$ is the height of the image in pixels, $W$ is the width of the image in pixels and the image has three colour channels (e.g. RGB or CIELAB). Alternatively, the first 2D image, $I_1$, 104 and second 2D image, $I_2$, 106 may be in black-and-white or greyscale. The first 2D image, $I_1$, 104 and second 2D image, $I_2$, 106 may be the same size.

The first 2D image, $I_1$, 104 and second 2D image, $I_2$, 106 each contain an image of an object, such as a face, that has moved between the images (i.e. is in a different configuration). The images 104, 106 may represent images of an object captured at different times, from different positions and/or from different orientations. For example, the images 104, 106 may be frames of video data captured at different times. The first 2D image 104 may be earlier in time than the second 2D image 106, or vice versa.

In embodiments where the object is a face, the image of the face in the first image 104 may have a first expression, pose, and/or orientation etc.. In the example shown, the image of the face in the first image 104 is smiling. The image of the face in the second image 106 may have a second expression, pose, and/or orientation etc.. In general, this can be different from the image of the face in the first image. In the example shown, the image of the face in the second image 106 is laughing.

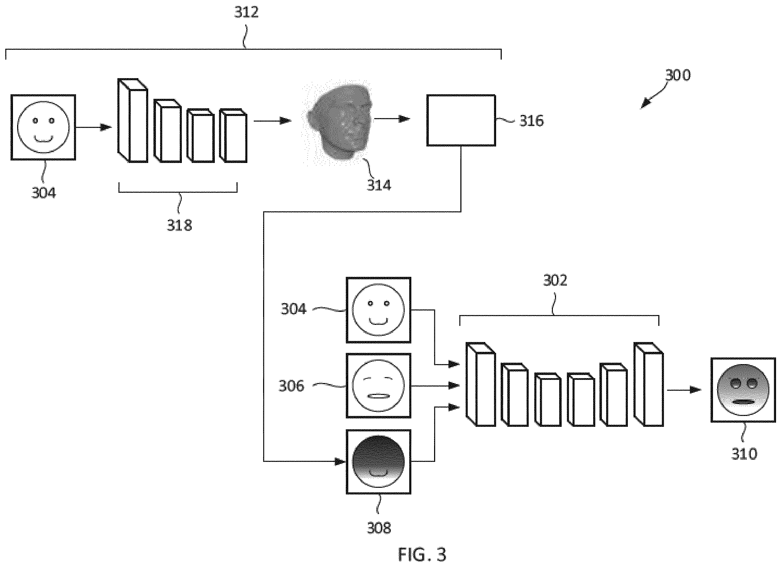

The 2D representation of the estimated 3D shape of the object 108, $I_3$, may be represented as a colour image, $I_3 = \mathbb{R}^{H \times W \times 3}$ , with pixel colour values in the image representing the 3D coordinates of corresponding pixels on the surface of the object that are visible in the first 2D image 104. An example of such a representation is the "Projected Normalised Coordinates Code" (PNCC - described in more detail below with reference to FIG. 3), though other representations may alternatively be used. Examples of such representations include UV space representations, which are cylindrical or spherical flattenings of the 3D face manifold into a contiguous 2D atlas where visible vertices of the face in $I_1$ are set to their x,y,z coordinates in the UV image and non-visible ones to zeros.

The 2D representation of the estimated 3D shape of the object 108 in effect encodes normalised x, y, and z coordinates of object vertices visible from each corresponding pixel in the first 2D image 104, and may be based on the camera capturing the first image's view angle.

The convolution neural network (CNN) 102 comprises a plurality of layers of nodes, each node associated with one or more parameters. The parameters of each node of the neural network 102 may comprise one or more weights and/or biases. The nodes take as input one or more outputs of nodes in a previous layer of the network. The one or more outputs of nodes in the previous layer are used by the node to generate an activation value using an activation function and the parameters of the CNN. One or more of the layers of the CNN 102 are convolutional layers, each configured to apply one or more convolutional filters. Examples of CNN 102 architectures are described below in relation to FIG.s 5 and 6. The CNN 102 may use a U-net architecture with skip-connections.

In some embodiments, the CNN 102 comprises an encoder portion and a decoder portion. The encoder portion takes as input the first 2D image 104, the second 2D image 106 and the 2D representation of an estimated 3D shape of the object 108 and generates an encoded representation of them. The encoder portion may comprise one or more downsampling layers. The decoder portion takes as input the encoded representation of the first 2D image 104, the second 2D image 106 and the 2D representation of an estimated 3D shape of the object 108 and generates the estimated 3D flow 110 of the object between the first 2D image 104 and the second 2D image 106 from them. The decoder portion may comprise one or more upsampling layers.

The 3D flow 110 of the object between the first 2D image 104 and the second 2D image 106 may be represented as a 2D image, $F = \mathbb{R}^{H \times W \times 3}$ , encoding a 3D optical flow between the first 2D image 104 and the second 2D image 106. The 3D flow 110 may be encoded on a per-pixel basis, i.e. the per-pixel optical flow between the first 2D image 104 and the second 2D image 106 is encoded as pixel colour values in the $F$. In other words, the colour values of each pixel in F encode a 3D flow vector from a corresponding pixel in $I_1$ to a corresponding pixel in $I_2$.

Given the first 2D image 104, $I_1$, the second 2D image 106, $I_2$, and the 2D representation of the estimated 3D shape of the object 108, $I_3$, the problem of 3D flow estimation for colour images may be represented symbolically as a mapping $\mathcal{F}: \{I, I, I\} \in \mathbb{R}^{H \times W \times 9} \to F^{H \times W \times 3}$.

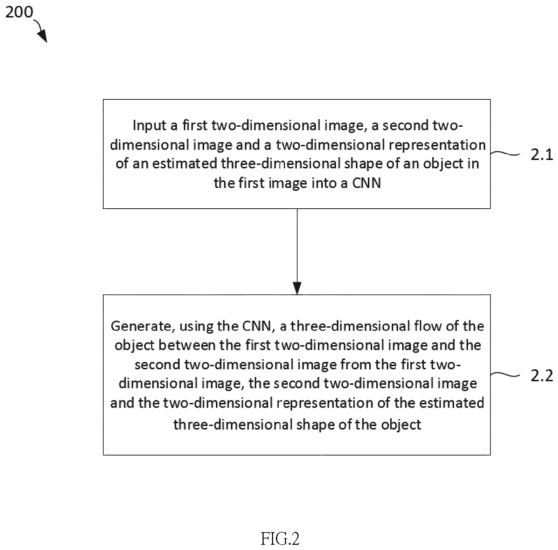

FIG. 2 shows a flow diagram of an example method 200 of generating an estimate of a three-dimensional flow of an object between two images. The method may be implemented on a computer.

At operation 2.1, a first 2D image, a second 2D image and a 2D representation of an estimated 3D shape of an object in the first image are input into a CNN. The object may be a human face.

The 2D representation of the estimated 3D shape of the object may comprise a colour image. Pixels of the colour image may encode 3D coordinates of points in the estimated 3D shape of the object that correspond to pixels of the object in the first 2D image or second 2D image. The 2D representation of the estimated 3D shape of the object may be represented using a PNCC, though alternative representations may also be used.

At operation 2.2, the CNN is used to generate a three-dimensional flow of the object between the first two-dimensional image and the second two-dimensional image from the first two-dimensional image, the second two-dimensional image and the two-dimensional representation of the estimated three-dimensional shape of the object. The 3D flow of the object between a first 2D image and the second 2D image may comprise a colour image encoding a 3D flow of pixels between the first 2D image and the second 2D image.

FIG. 3 shows an overview of a further example of a method 300 for generating an estimate of a three-dimensional flow between two images. The method 300 is similar to the method described above in relation to FIG. 1, but includes a pre-processing step 312 in which the 2D representation of the estimated 3D shape of the object 308 is generated from the first 2D image 304. Following the pre-processing step 312, the method proceeds as in FIG. 1; a convolutional neural network 302 receives as input a first 2D image 304 comprising an image of an object in a first configuration (in this example a facial image with a first expression), a second 2D image 306 comprising the image of an object in a second configuration (in this example a facial image with a second expression), and a 2D representation of an estimated 3D shape of the object 308. The convolutional neural network 302 processes the inputs through a plurality of neural network layers to generate an estimated 3D flow 310 of the object between the first 2D image 304 and the second 2D image 306.

The aim of the pre-processing step 312 is to densely regress the 3D geometry of the object in the first 2D image 104. A 3D shape 314 is generated from the first 2D image 304 from which the 2D representation of the estimated 3D shape of the object 308 is generated using a projection model 316, such as PNCC.

In the embodiment shown, the pre-processing step uses a pre-trained neural network 318 to generate the 3D shape 314, $S \in \mathbb{R}^{3 \times N}$ (i.e. an N-vertex mesh), of the object in the first 2D image 304, $I_1$. The pre-trained neural network 318 may be a convolutional neural network. The pre-trained neural network 318 regresses a dense 3D mesh 314, **S,** through per-vertex 3D coordinate estimation.

In some embodiments, the neural network is a convolution neural network with one or more skip connections between layers. The network may comprise one or more fully connected layers. For example, the final layer may be a fully connected layer. An example of such a network architecture is ResNet-50, with the final layer replaced by a convolutional layer followed by a fully connected layer.

While the embodiment shown uses a neural network 318 to regress the dense 3D mesh 314, **S,** it will be appreciated that other methods of fitting a 3D mesh to an image may alternatively be used, such as iterative fitting of a 3D Morphable model (3DMM).

The projection model 316 takes as input the 3D mesh 314 and generates the 2D representation of the estimated 3D shape of the object 308 from it. The projection model may further take as input one or more camera parameters, **c,** that encode properties of the camera capturing the first 2D image 304. For example, the camera parameters may include rotation angles, **R,** translations, $\mathbf{t_{3D}}$, and/or scale parameters, $f_c$. In some embodiments, a specific camera model, such as Scaled Orthographic Projection, may be assumed.

The projection model 316 may use a Projected Normalised Coordinates Code (PNCC). The PNCC encodes normalised x, y, and z coordinates of vertices of the 3D mesh 314 visible from each corresponding pixel in the first 2D image 304 based on a camera view angle. Given a 3D mesh 314, **S,** the 2D representation of the estimated 3D shape of the object 308, $I_3$, can be determined f using:

$$\mathcal{PNCC}(x,y) \underset{(x,y) \in M}{=} \mathcal{V}(S, c) = P\big(R\big[S(t_1^j), S(t_2^j), S(t_3^j)\big]b + t_{3D}\big), \underset{t^j \in \{T | t^j \text{ visible from } (x,y)\}}{}$$

where $\mathcal{V}(S, c)$ is a function rendering a normalised version of S, $c \in \mathbb{R}^7$ is the camera parameters (i.e. rotation angles, translation and scale ($\mathbf{R}, \mathbf{t_{3D}}, f_c$)), and P is a 3x3 diagonal matrix with main diagonals ($f_c/W, f_c/H, f_c/D$), with $W$ being the width of first image, $H$ being the height of the first image and $D$ being a maximum z value. $M$ is the set of foreground pixels in the first 2D image 102, $I_1$. Here, **S** is represented as a matrix storing column-wise x-y-z coordinates of the $N$ vertices of the 3D mesh 314. The visible triangle from pixel $(x, y)$ in $I_1$ is denoted $t^j = \left(t_1^j, t_2^j, t_3^j\right)$ where $\left(t_i^j \in \{1, \ldots, N\}\right)$. This may be detected using a hardware-based renderer. **b** is the barycentric coordinate of pixel $(x, y)$ lying in the projected triangle, $t^j$, on the first 2D image 302, $I_1$.

The multiplication with **P** scales the posed 3D mesh 314 with $f_c$ to be first in the image space coordinates and then normalises it with the width and height of the rendered image size and the maximum z value, $D$, computed from the entire dataset on which training was performed. This results in an image 306 with RGB channels storing normalised (i.e. in the range [0, 1]) x-y-z coordinates of the corresponding 3D mesh 314.

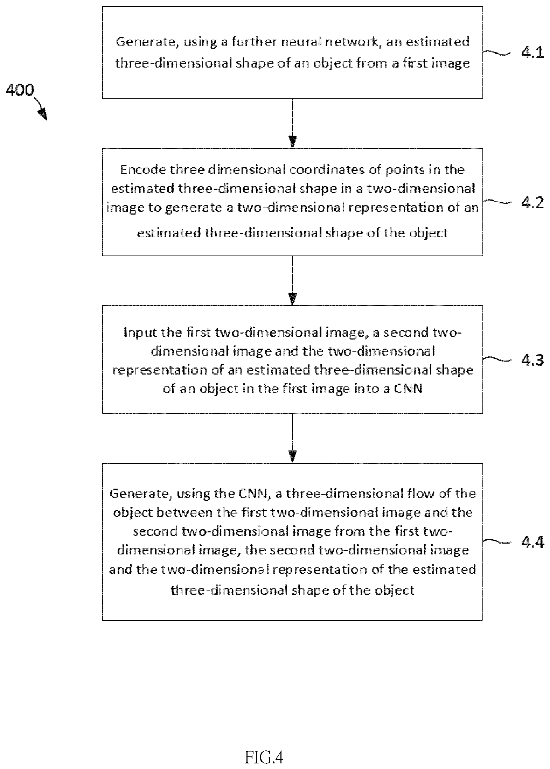

FIG. 4 shows a flow diagram of a further example method 400 of generating an estimate of a three-dimensional flow between two images. The method may be implemented on a computer.

At operation 4.1, a further neural network is used to generate an estimated three-dimensional shape of an object from a first image.

At operation 4.2, three-dimensional coordinates of points in the estimated three-dimensional shape are encoded in a two-dimensional image to generate a two-dimensional representation of an estimated three-dimensional shape of the object

Operation 4.3 and 4.4 proceed as described in relation to operations 2.1 and 2.2 respectively in FIG. 2.

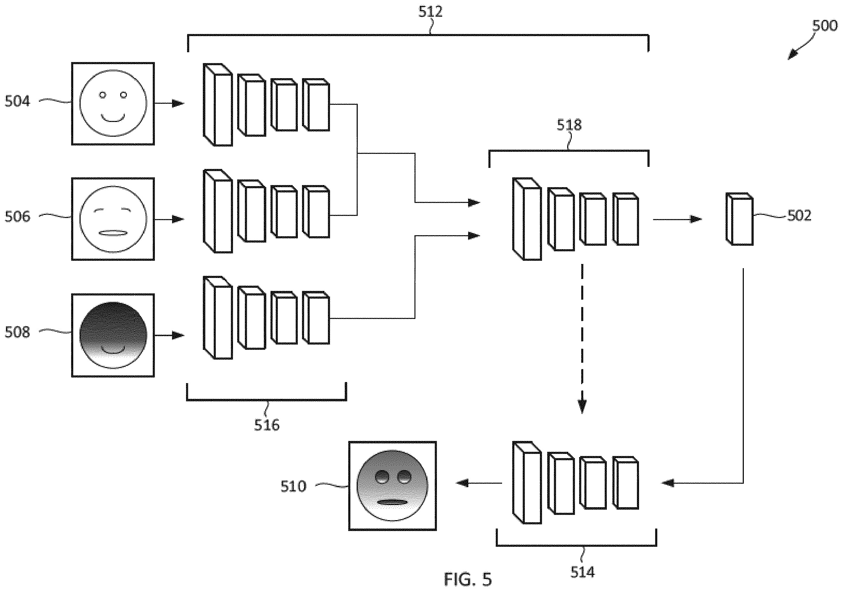

FIG. 5 shows an example of a structure of a neural network 500 for estimating a three-dimensional flow between two images. The neural network 500 comprises an encoder section 512 and a decoder section 514. The encoder section 512 takes as input the first 2D image 504, the second 2D image 506 and the 2D representation of an estimated 3D shape of the object 508 and generates an encoded representation 502 of them. The decoder section 514 takes as input the encoded representation 502 (also referred to as an embedding) and generates the estimated 3D flow 510 of the object from it.

In some embodiments, the encoder section 512 comprises a plurality of input branches 516. The plurality of input branches 516 comprises a first input branch configured to process the first 2D image 504 through one or more convolutional layers, a second input branch configured to process the second 2D image 506 through one or more convolutional layers, and a third input branch configured to process the 2D representation of the estimated three-dimensional shape of the object 508 through one or more convolutional layers. Each of the plurality of input branches 516 may comprise one or more downsampling layers configured to downsample its input. One or more of the stages of the input branches 516 may each produce an intermediate feature map that may be stored for use in the decoder section 514 of the neural network 500.

In some embodiments, the plurality of input branches 516 comprises a correlation layer configured to correlate output of the first branch and output of the second branch. The correlation layer may be configured to convolve the patches of data in the output of the first branch with patches of data in the output of the second branch. As such, it has no learnable weights. To avoid convolving all patches in the output of the first branch with all patches of data in the output of the second branch, a maximum distance may be set for the comparisons.

The encoder section 512 may further comprise a trunk network 518 (also referred to as "the trunk"). The trunk network 518 receives input derived from the plurality of input branches 516 and jointly processes it through a plurality of convolutional layers to generate an encoded representation 502. The trunk network 518 may comprise one or more downsampling layers configured to downsample its input. One or more of the stages of the trunk network 516 may each produce an intermediate feature map that may be stored for use in the decoder section 514 of the neural network 500.

The decoding section 514 takes as input the encoded representation 502 and processes it through a plurality of deconvolutional layers to generate the estimated 3D flow 510 of the object. The flow 510 may be estimated from the coarsest level until full resolution. In the input layer of the decoding section 514, one or more deconvolutional filters may be applied to the encoded representation 502 to generate an initial set of feature maps and a first estimated flow. Each deconvolutional layer of the decoding section 514 after the initial layer may take as input a current estimated flow (or an upsampled version of the current estimated flow) and the feature maps output by the previous deconvolutional layer, and outputs a set of feature maps. A current estimated flow may also be generated. A corresponding intermediate feature map from the encoder section 512 may also be input into each deconvolutional layer of the decoding section 514 after the initial layer. The deconvolutions may be implemented using a convolution of fractional stride.

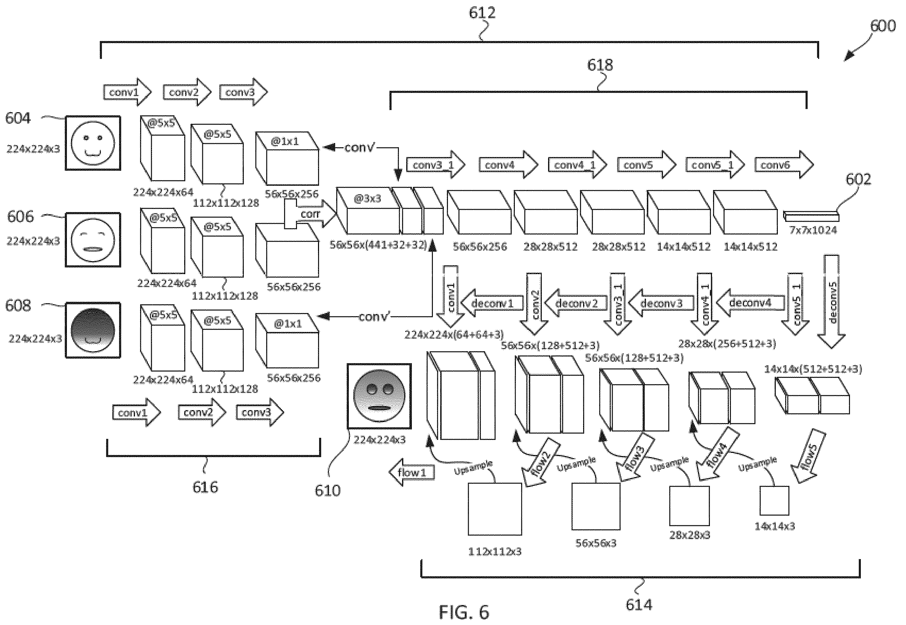

FIG. 6 shows a detailed example of a structure of a neural network 600 for estimating a three-dimensional flow between two images. As in FIG. 5, the neural network 600 comprises an encoder section 612 and a decoder section 614. The encoder section 612 takes as input the first 2D image 604, the second 2D image 606 and the 2D representation of an estimated 3D shape of the object 608 and generates an encoded representation 602 of them. The decoder section 614 takes as input the encoded representation 602 and generates the estimated 3D flow 610 of the object from it.

In the following description, specific dimensions of input images, sets of feature maps and/or convolutional kernel sizes will be described. However, it will be appreciated that other examples of these quantities may alternatively be used. Where applied, downsampling is performed with strides of length two, though in other embodiments other stride lengths greater than one may be used to perform downsampling (e.g. stride 3, 4 etc. ). Nonlinearity is implemented using ReLU layers, but other types of non-linear activations may alternatively be used.

The encoder section 612 comprises three input branches 516. A first input branch is configured to process the first 2D image 504 through one or more convolutional layers, a second input branch is configured to process the second 2D image 506 through one or more convolutional layers, and a third input branch is configured to process the 2D representation of the estimated three-dimensional shape of the object 508 through one or more convolutional layers.

In the input section 616, each input branch takes its corresponding 2D image 604, 606, 608 of dimension 224x224x3 as input and applies an initial set of convolutional filters (denoted "conv1") to them to generate a corresponding first set of feature maps. The first set of feature maps has dimension 224 x 224 x 64 and each of the initial set of convolutional filters (conv1) has a kernel size of 5 x 5 and stride two. A second set of convolutional filters (denoted "conv2") with kernel size 5x5 and stride two is applied to each of the first set of feature maps to generate a corresponding second set of feature maps, each with dimension 112 x 112 x 128. A third set of convolutional filters (denoted "conv3") with kernel size 5x5 and stride two is applied to each of the second set of feature maps to generate a corresponding third set of feature maps, each with dimension 56 x 56 x 256.

A correlation layer (denoted "corr") is applied between the third set of feature maps from the first input branch and the third set of feature maps from second input branch. An example of such a correlation layer is described in *"FlowNet: Learning Optical Flow with Convolutional Networks"* (P. Fischer et al., Proceedings of the IEEE international conference on computer vision, pages 2758-2766, 2015), the contents of which are incorporated by reference. The correlation layer produces an output of dimension 56 x 56 x 441. A neighbourhood search size of 2x(21)+1 pixels may be used as a maximum distance (neighbourhood) for the correlations, though other sizes may alternatively be used.

Separately, a set of convolution filters (denoted " conv' ") of kernel size 1x1 and stride 1 is applied the third set of feature maps from the first input branch to generate a 56 x 56 x 32 dimensional output and to the third set of feature maps from the first input branch to generate a further 56 x 56 x 32 dimensional output. These are concatenated with the output of the correlation layer to generate a fourth set of feature maps of dimension 56x56x(441+32+32).

The next convolutional layer (denoted "conv3_1") applies a set of convolutional filters of kernel size 3x3 and stride one to the fourth set of feature maps to generate a fifth set of feature maps of dimension 56x56x256. The fifth set of feature maps is input into the next convolutional layer (denoted "conv4") with kernel size 3x3 and stride two to generate a sixth set of feature maps of dimension 28x28x512. A further convolutional layer (denoted "conv4_1") applies a set of convolutional filters of kernel size 3x3 and stride one to the sixth set of feature maps to generate a seventh set of feature maps of dimension 28x28x512. The next convolutional layer (denoted "conv5") applies a set of convolutional filters of kernel size 3x3 and stride two to the sixth set of feature maps to generate an eighth set of feature maps of dimension 14x14x512. A further convolutional layer (denoted "conv5_1") applies a set of convolutional filters of kernel size 3x3 and stride one to the eighth set of feature maps to generate a ninth set of feature maps of dimension 14x14xx512.

The last layers (denoted "conv6") of the encoder section 618 applies a set of convolutional filters of kernel size 3x3 and stride two to the ninth set of feature maps to generate the encoded representation 602 with dimension 7 x 7 x 1024.

The decoder section 614 comprises a plurality of convolutional layers that each take as input a corresponding concatenation of a set of features maps from the trunk/input branch, a set of deconvolutional feature maps and, if available, a current flow estimate. Each set of convolutional layers outputs a deconvolutional feature map and an updated current flow estimate.

The first layer of the decoder section 614 of the network applies an initial deconvolutional filter (denoted "deconv5") to the embedded representation 602 to generate a first set of deconvolutional feature maps of dimension 14x14x512. In some embodiments, an initial flow estimate of dimension 14x14x3 may be estimated from the encoded representation 602. One or more convolutional layers may be applied to the encoded representation 602 to generate the initial flow estimate.

The first set of deconvolutional feature maps is concatenated with the ninth set of feature maps from the trunk branch and if available, the initial flow estimate to generate a tensor of dimension 14x14x(512+512+3). A deconvolutional layer (denoted "deconv4") is applied to this tensor to generate a second set of deconvolutional feature maps of dimension 28x28x256. An updated current flow estimate of dimension 14x14x3 may also be generated (denoted "flow5"). The updated current flow estimate may be produced by applying one or more convolutional layers to the concatenation of the initial flow estimate, the ninth set of feature maps from the trunk branch and the first set of deconvolutional feature maps.

The second set of deconvolutional feature maps is concatenated with the seventh set of feature maps from the trunk branch and, if available, an upscaled current flow estimate to generate a tensor of dimension 28x28x(256+512+3). A deconvolutional layer (denoted "deconv3") is applied to this tensor to generate a third set of deconvolutional feature maps of dimension 56x56x128. An updated current flow estimate of dimension 28x28x3 may also be generated(denoted "flow4"). The updated current flow estimate may be produced by applying one or more convolutional layers to the concatenation of the upscaled current flow estimate, the seventh set of feature maps from the trunk branch and the second set of deconvolutional feature maps.

The third set of deconvolutional feature maps is concatenated with the fifth set of feature maps from the trunk branch and, if available, an upscaled current flow estimate to generate a tensor of dimension 56x56x(128+256+3). A deconvolutional layer (denoted "deconv2") is applied to this tensor to generate a fourth set of deconvolutional feature maps of dimension 112x112x64. An updated current flow estimate of dimension 56x56x3 may also be generated (denoted "flow3"). The updated current flow estimate may be produced by applying one or more convolutional layers to the concatenation of the upscaled current flow estimate, the fifth set of feature maps from the trunk branch and the third set of deconvolutional feature maps.

The fourth set of deconvolutional feature maps is concatenated with a second set of feature maps from the input branch (i.e. the second set of feature maps from the first input branch, the second set of feature maps from the second input branch or the second set of feature maps from the third input branch) and, if available, an upscaled current flow estimate to generate a tensor of dimension 112x112x(64+128+3). A deconvolutional layer (denoted "deconv1") is applied to this tensor to generate a fifth set of deconvolutional feature maps of dimension 224x224x64. An updated current flow estimate of dimension 112x112x3 may also be generated (denoted "flow2"). The updated current flow estimate may be produced by applying one or more convolutional layers to the concatenation of the upscaled current flow estimate, the second set of feature maps from the input branch and the fourth set of deconvolutional feature maps.

The fifth set of deconvolutional feature maps is concatenated with a first set of feature maps from the input branch (i.e. the first set of feature maps from the first input branch, the first set of feature maps from the second input branch or the first set of feature maps from the third input branch) and, if available, an upscaled current flow estimate to generate a tensor of dimension 224x224x(64+64+3). A final flow estimate 610 of dimension 224x224x3 is generated from this tensor (denoted "flow1"). The final flow estimate may be produced by applying one or more convolutional layers to the concatenation of the upscaled current flow estimate, the first set of feature maps from the input branch and the fifth set of deconvolutional feature maps.

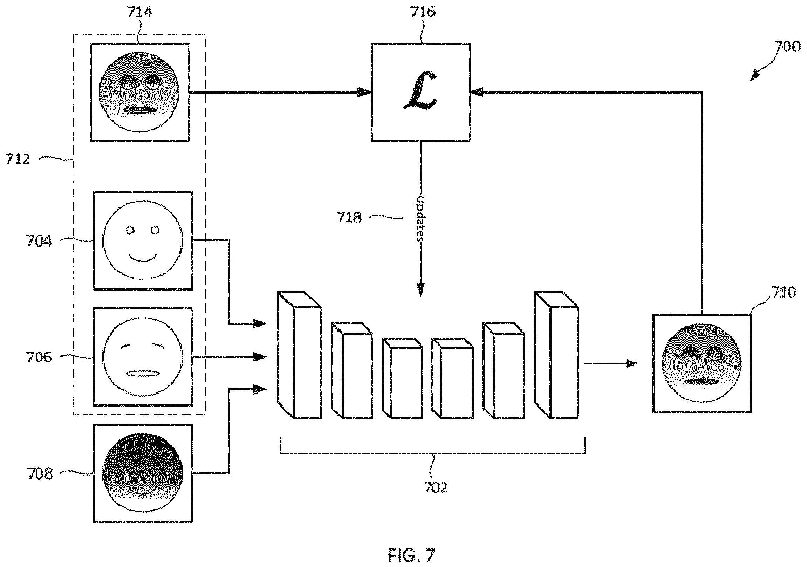

FIG. 7 shows a schematic overview of a method 700 of training a neural network to estimate of a three-dimensional flow between two images. A convolutional neural network 702 receives as input a first 2D image 704 comprising an image of an object in a first configuration (in this example a facial image with a first expression), a second 2D image 706 comprising the image of an object in a second configuration (in this example a facial image with a second expression), and a 2D representation of an estimated 3D shape of the object 708. The first 704 and second 706 images form a training pair 712 taken from a training set, and are associated with a known 3D flow 314 (also referred to herein as a "ground truth 3D flow") between them. The convolutional neural network 702 processes the inputs through a plurality of neural network layers to generate an estimated 3D flow 710 of the object between the first 2D image 704 and the second 2D image 706. The estimated 3D flow 710 is compared to the known 3D flow 714 using an objective function 716 (also referred to herein as a loss function). The objective function 716 is used to determine one or more parameter updates 718 for the neural network 702, for example using an optimisation procedure. The method may be iterated until a threshold condition is satisfied, such a threshold number of training epochs being completed.

The training pair 712 of images may be taken from a batch of training data. In some embodiments, the images in the pair may be normalised in the range [0,1]. The batch comprises one or more training pairs, typically a plurality of training pairs, which are a subset of the total training dataset. For example, the batch size may be in the range [10,100], preferably in the range [10,30]. For example, the batch size may be sixteen. A plurality of batches covers the whole training dataset. The parameter updates 718 to the neural network may be determined after each batch has been fully processed, i.e. after the value objective function for each training pair 712 in the batch has been determined. The training method 700 may iterate over the training dataset a plurality of times, with each forward and backward pass defining a training epoch.

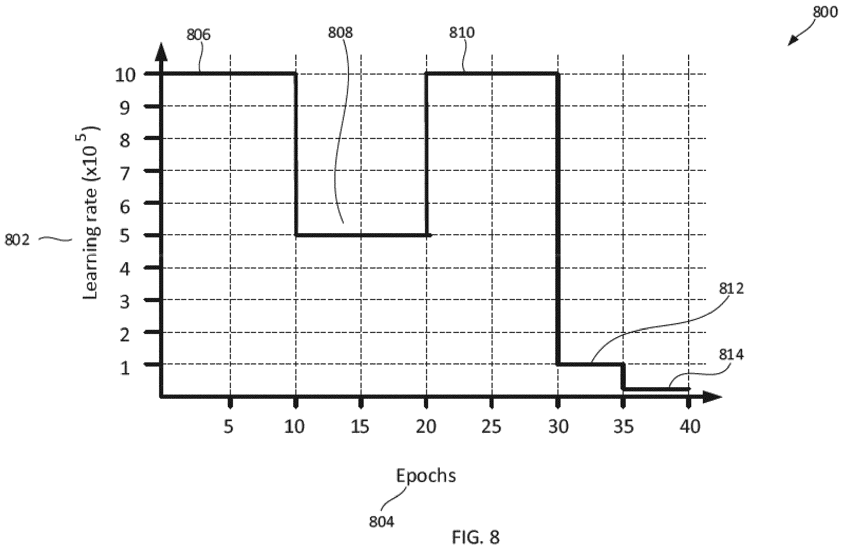

An optimisation procedure may be applied to the objective function in order to determine the parameter updates. Examples of such an optimisation procedure are stochastic gradient descent and the Adam optimisation algorithm (for example, with parameters $\beta_1$=0.9 and $\beta_2$=0.999), though any suitable optimisation procedure may alternatively be used. The optimisation procedure may be associated with a learning rate controlling the size of the parameter updates 718. The learning rate may vary throughout the training, for example as described below in relation to FIG. 8.

The objective function 716 may comprise an endpoint error term, $\mathcal{L}_{end}$, that compares the estimated 3D flow 710 between the first 2D image 704 and the 2D image 706 and the ground truth 3D flow 714 between the first 2D image 704 and the 2D image 706. The endpoint error term may comprise a Frobenius norm error between the estimated 3D flow 710 and the ground truth 3D flow 714, i.e.

$$\mathcal{L}_{end} = w\|F^{GT} - F(\Psi)\|_F$$

where $F^{GT}$ is the ground truth 3D flow 714, $F(\Psi)$ is the estimated 3D flow 710 and $w$ is a hyper parameter controlling the relative importance of the endpoint error term 716 in the objective function 716. However, it will be appreciated that other norms may alternatively be used, for example an $L_{2,1}$ or $L_{p,q}$ norm.

In embodiments where the neural network 702 generates estimated flows at a series of resolutions, such as the embodiments described in relation to FIG.s 5 and 6, the endpoint error term, $\mathcal{L}_{end}$, may comprise a weighted sum over endpoint errors from each of the resolutions. For example, the endpoint error may be given by:

$$\mathcal{L}_{end} = \sum_{i=1}^{L} w_i \left\| F_i^{GT} - F_i(\Psi) \right\|_F$$

where $F_i^{GT}$ is the ground truth 3D flow at resolution $i$, $F_i(\Psi)$ is the estimated 3D flow 710 at resolution $i$ and $w_i$ is a hyper parameter controlling the relative importance of each resolution in the objective function 716. The resolutions are indexed by an integer label $i$ from 1 being the lowest resolution (e.g. 14x14x3 in the example of FIG. 6) to L being the resolution of the input images (e.g. 224x224x3 in the example of FIG. 6). As above, it will be appreciated that other norms may alternatively be used instead of the Frobenius norm, for example an $L_{2,1}$ or $L_{p,q}$ norm. The ground truth 3D flow at resolution $i$ may be generated by downsampling the ground truth 3D flow 714 at the resolution of the input images.

The values of the hyperparamter $w_i$ may be the same for each resolution. Alternatively, one or more of the hyperparamter $w_i$ may have a different value to one or more of the other hyperparameters $w_i$. The value of each hyperparamter may lie in the range [0.1, 10], for example in the range [0.5, 2]. In some embodiments, the hyperparameters $w_i$ may all be equal to one.

The objective function 716 may alternatively or additionally comprise a photo-consistency error term, $\mathcal{L}_{pc}$, that compares pixel values sampled from the second 2D image 706 to pixel values in the first 2D image 704. The pixel values in the second 2D image are sampled based on a warping of the 2D representation of the estimated three-dimensional shape of the object 708 using the estimated 3D flow 710. For example, the 2D representation of the estimated three-dimensional shape of the object 708 is warped using the estimated 3D flow 310, and the second 2D image 706 is sampled at vertices of the resulting 3D shape. These are compared to the corresponding pixel values in the first 2d image 704.

An example of a photo-consistency error term is given by:

$$\mathcal{L}_{pc} = \alpha \left\| I_1 - \mathcal{W}(F, I_3;\ I_2) \right\|_F^2$$

where F is the estimated 3D flow, $I_1$ is the first 2D image 704, $I_2$ is the second 2D image 706 and $I_3$ is the 2D representation of the estimated three-dimensional shape of the object 708. $\alpha$ is a hyperparamter controlling the relative importance of the photo-consistency error term in the objective function 716. $\alpha$ may lie in the range [1, 100], preferably in the range [5, 20]. For example, $\alpha$ may be equal to ten. $\mathcal{W}$ is a function that warps the 3D shape of $I_1$ encoded inside the 2D representation 708 using the estimated flow $F$ and samples $I_2$ at the vertices of the resultant projected 3D shape. The warping function may be implemented using a differentiable layer detecting any occlusions by the virtue of the 3D flow, and sampling the second 2D image 706 (i.e. backward warping) in a differentiable manner at the output stage of neural network 702. It will be appreciated that other norms may alternatively be used instead of the Frobenius norm, for example an $L_{2,1}$ or $L_{p,q}$ norm.

FIG. 8 shows an example of a training schedule 800 for training a neural network to estimate of a three-dimensional flow between two images. The training schedule 800 shows an example of how a learning rate may vary during the training. The y-axis shows the leaning rate 802. The x-axis shows time 804, measured in training epochs. In the example shown, the training lasts for forty epochs.

During a first number of epochs 806 (in this example, the first ten epochs) training is performed with a first learning rate (in this example, $10 \times 10^{-5}$). The learning rate then drops to a second learning rate (in this example, $5 \times 10^{-5}$) for a second number of epochs 808 (in this example, a further ten epochs). The learning rate then rises to a third learning rate (in this example, back to $10 \times 10^{-5}$) for a third number of epochs 810 (in this example, a further ten epochs). The third learning rate may be the same as the first learning rate in some embodiments. Alternatively, it may be different to the first learning rate. The learning rate then drops again to a fourth learning rate (in this example, $1 \times 10^{-5}$) for a fourth number of epochs 812 (in this example, five epochs), before dropping again to a fifth learning rate (in this example, $0.1 \times 10^{-5}$) until the end of the training 814.

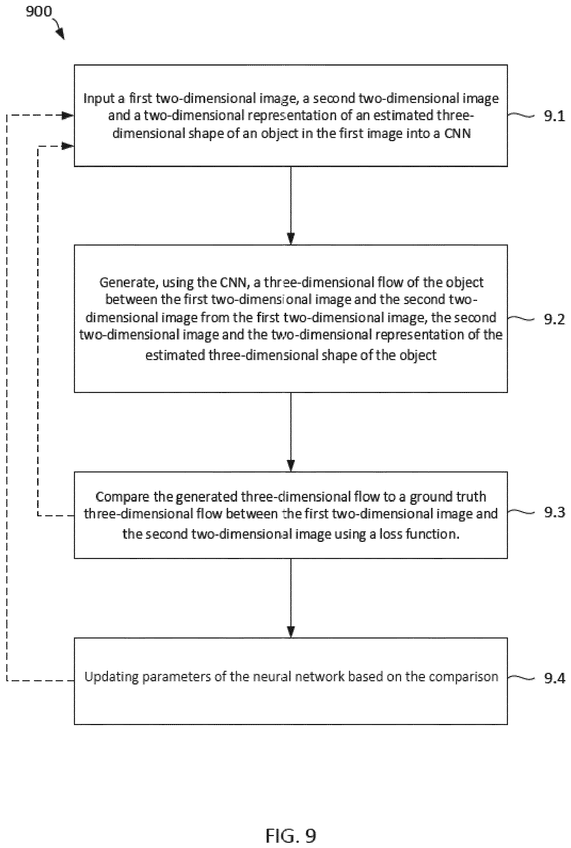

FIG. 9 shows a flow chart of an example method 900 of training a neural network to estimate of a three-dimensional flow between two images.

At operation 9.1, a first 2D image, a second 2D image and a 2D representation of an estimated 3D shape of an object in the first image are input into a CNN. The object may be a human face. Operation 9.1 may be identical to operation 2.1 described above in relation to FIG. 2.

The first 2D image and second 2D image may be selected from a training dataset comprising a plurality of image pairs, each pair associated with a ground truth 3D flow between them.

At operation 9.2, the CNN is used to generate a 3D flow of the object between the first 2D image and the second 2D image from the first 2D image, the second two-dimensional image and the 2D representation of the estimated 3D shape of the object. Operation 9.2 may be identical to operation 2.2 described above in relation to FIG. 2.

At operation 9.3, the generated 3D flow is compared to a ground truth 3D flow between the first 2D image and the second 2D image using an objective function.

The objective function may comprise an endpoint error term based on a difference between the generated 3D flow and the ground truth 3D flow between the first 2D image and the second 2D image. The endpoint error term may further compare a generated series of 3D flows at different resolutions to a corresponding series of ground truth 3D flows at different resolutions. The series of ground truth 3D flows at different resolutions may be derived from the ground truth 3D flow between the first 2D image and the second 2D image, for example by downsampling.

The objective function may comprise a photo-consistency error comparing pixel values sampled from the second two-dimensional image to pixel values in the first two-dimensional image, wherein the pixel values in the second two-dimensional image are sampled based on a warping of the two-dimensional representation of the estimated three-dimensional shape of the object using the generated three-dimensional flow of the object between the first two-dimensional image and the second two-dimensional image.

Operations 9.1 to 9.3 may be iterated over a training batch before proceeding to operation 9.4.

At operation 9.4, parameters of the neural network may be updated based on the comparison. An optimisation procedure may be used to determine the parameter updates. The parameter updates may be based all of the objective function evaluations performed in a training batch. For example, the updates may be determined based on an average value/a sum of the objective function taken over the corresponding training batch.

Operations 9.1 to 9.4 may be iterated over the training dataset until a threshold condition is satisfied. The threshold condition may be a threshold number of training epochs.

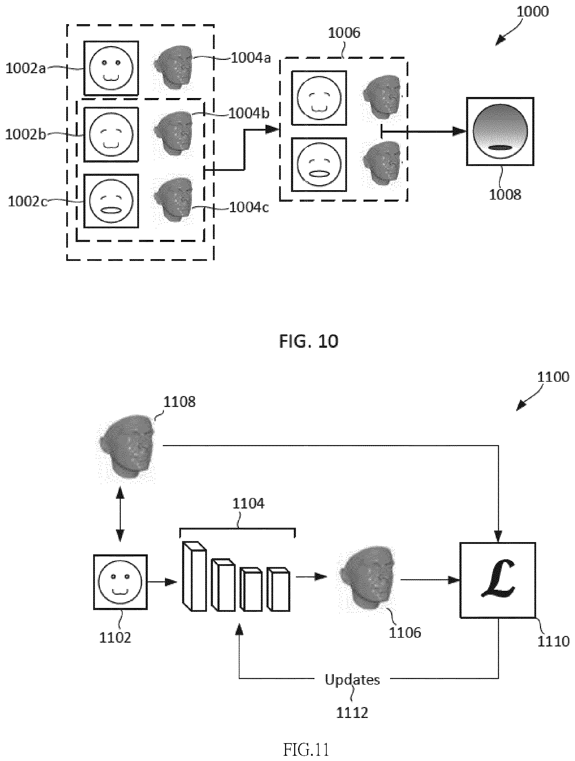

FIG. 10 shows an example of a method 1000 for generating ground truth training data for use in training a neural network to estimate of a 3D flow of an object between two images. A sequence of 2D images 1002a-c is extracted from each of one or more sets of video data. For each image 1002a-c, a 3D morphable model 1004a-c (3DMM) of an object of a given type is fitted to the image. Pairs of images 1006 are selected from the dataset, and their corresponding 3DMMs are compared to generate a ground truth (or "pseudo-ground truth") 3D flow 1008 between them. It will be appreciated that other methods of generating ground truth 3D flows of objects between images may alternatively be used to generate a suitable training set for use in the training methods described herein.

The 3DMMs may use an additive combination of expression and identity variation. The object shape (e.g. a facial shape) may be represented as a vectorised 3D shape comprising N vertices, $\mathbf{x}=[x_1, y_1, z_1, \ldots x_N, y_N, z_N]^T \in \mathbb{R}^{3N}$. $\mathbf{x}$ may be parametrised as:

$$\mathbf{x(i, e)} = \bar{\mathbf{x}} + \mathbf{U}_{id}\mathbf{i} + \mathbf{U}_{exp}\mathbf{e}$$

where $\bar{\mathbf{x}}$ is a mean shape vector, $\mathbf{U}_{id} \in \mathbb{R}^{3N \times n_i}$ is an identity basis with $n_i$ principle components (with $n_i < {<}3N$), $\mathbf{U}_{exp} \in \mathbb{R}^{3N \times n_e}$ is an expression basis with $n_e$ principle components (with $n_e{<}{<}3N$), and $\mathbf{i} \in \mathbb{R}^{n_i}$ and $\mathbf{e} \in \mathbb{R}^{n_e}$ are identity and expression parameters respectively. For facial images, the identity part may originate from the Large Scale Facial Model, though other facial models may alternatively be used. The expression part may originate from, for example, the model described in "The 3d menpo facial landmark tracking challenge" (S. Zafeiriou et al., Proceedings of the IEEE International Conference on Computer Vision, pages 2503-2511, 2017).

The 3DMM may be fitted to a plurality of object (e.g. facial) landmarks in the images. A batch based approach may be used to take into account the information from a plurality of video frames simultaneously and exploit the rich dynamic information usually contained in object (e.g. facial) videos. The batch-based approach may be an energy minimization to fit the combined identity and expression 3DMM model on facial landmarks from the plurality of frames of the input video simultaneously.

As an example, for generating a facial training dataset, a collection of 12,000 RGB videos with 19 million frames in total and 2,500 unique identities may be used. The 3D reconstruction method described above is applied, together with some video pruning steps to omit cases where the automatic estimations had failed.

To determine the ground truth 3D flow 1008 given a pair of images $I_1$ and $I_2$ with corresponding 3D shapes $\mathbf{S}_1$ and $\mathbf{S}_2$, a 3D flow map, $F$, may be created using:

$$F(x,y) \atop (x,y)\in M = f_{c2}\left(\mathbf{R}_2\left[\mathbf{S}_2(t_1^j), \mathbf{S}_2(t_2^j), \mathbf{S}_2(t_3^j)\right]\mathbf{b} + \mathbf{t}_{3d2}\right)_{t\in\{T|t \text{ is visible from pixel }(x,y)\text{ in } I_1\}} - f_{c1}\left(\mathbf{R}_1\left[\mathbf{S}_1(t_1^j), \mathbf{S}_1(t_2^j), \mathbf{S}_1(t_3^j)\right]\mathbf{b} + \mathbf{t}_{3d1}\right)_{t\in\{T|t \text{ is visible from pixel }(x,y)\text{ in } I_1\}}$$

where $M$ is the set of foreground pixels in $I_1$, S 2 R3N is a matrix storing the column-wise x-y-z coordinates of the $N$-vertices of the 3D shape of $I_1$, $\mathbf{R_i} \in \mathbb{R}^{3 \times 3}$ is a rotation matrix, $\mathbf{t_{3di}} \in \mathbb{R}^3$ is a 3D translation, $f_{c1}$ and $f_{c2}$ are the scales of the orthographic camera for the first and second image, respectively, $\mathbf{t}^j = [t_1^j; t_2^j; t_3^j]$ ($t_j \in\{1, \ldots, N\}$) is the visible triangle from pixel (x, y) in image $I_1$, for example detected by a hardware-based renderer, $T$ is the set of all triangles in the mesh of $\mathbf{S}$, and $\mathbf{b} \in \mathbb{R}^3$ is the barycentric

coordinates of pixel (x; y) lying inside the projected triangle $t^j$ on image $I_1$. Background pixels may be set to zero and ignored during training, for example using a masked loss.

FIG. 11 shows an example of a method 1100 for training a neural network to generate the 3D shape of an object from a 2D image. The aim of the training is to train the neural network 1104 to regress a dense 3D mesh through per-vertex 3D coordinate estimation. Once trained, the neural network 1104 may be used, for example, in the pre-processing steps described above in relation to FIG.s 3 and 4.

A 2D image 1102 is input into a neural network 1004. The neural network processes the input image 1102 to generate a prospective 3D shape 1006, $s \in \mathbb{R}^{3 \times N}$ (i.e. an N-vertex mesh), from it. The prospective 3D shape 1106 is compared to a ground truth 3D shape 1108, $s^{GT} \in \mathbb{R}^{3 \times N}$, using an objective function 1110, $\mathcal{L}$, in order to determine parameter updates 1012 for the neural network 1104. The parameter updates may be determined using an optimisation function, such as stochastic gradient descent or the Adam optimisation algorithm (for example, with parameters $\beta_1$=0.9 and $\beta_2$=0.999), though any suitable optimisation procedure may alternatively be used.

A dataset of 2D images 1102, each with a corresponding ground truth 3D shape 1108, is used to perform the training. The dataset may be divided into a plurality of batches, each comprising a plurality of 2D images 1102 and their corresponding ground truth 3D shapes 1108. The batch size may be in the range [10, 100], preferably in the range [25, 40]. In some embodiments, the batch size is 32.

The neural network may have the structure of the neural network described in relation to FIG. 3.

The objective function 1110 may comprise a vertex term, $\mathcal{L}_{vert}$. The vertex term compares locations of vertices in the prospective 3D shape 1006 to locations of vertices in the ground truth 3D shape 1008. The vertex term penalises the deviation of each vertex's 3D coordinate in the prospective 3D shape 1006 from the corresponding ground truth coordinate. An example of a vertex term is given by:

$$\mathcal{L}_{vert} = \frac{1}{N} \sum_{i=1}^{N} \left\| s_i^{GT} - s_i \right\|^2,$$

where $i$ labels the $N$ vertices of the mesh. It will be appreciated that other forms of the vertex term may alternatively be used, such as using a different type of norm.

The objective function 1010 may alternatively or additionally comprise an edge term, $\mathcal{L}_{edge}$. The edge term compares lengths of edges in the prospective 3D shape 1006 to lengths of edges in the ground truth 3D shape 1008. The edge term ensures similar edge lengths between vertices in the prospective 3D shape 1006 and the ground truth 3D shape 1108. An example of an edge term is given by:

$$\mathcal{L}_{edge} = \frac{1}{O} \sum_{j=1}^{O} \left\| e_j^{GT} - e_j \right\|^2,$$

where $j$ labels the $O$ edges of the mesh. It will be appreciated that other forms of the edge term may alternatively be used, such as using a different type of norm.

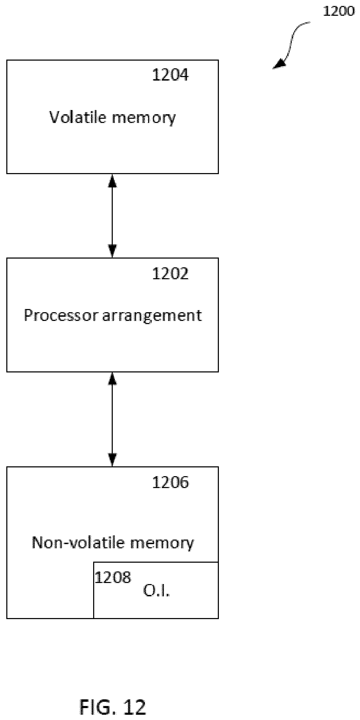

Figure 12 shows a schematic example of a system/apparatus for performing any of the methods described herein. The system/apparatus shown is an example of a computing device. It will be appreciated by the skilled person that other types of computing devices/systems may alternatively be used to implement the methods described herein, such as a distributed computing system.

The apparatus (or system) 1200 comprises one or more processors 1202. The one or more processors control operation of other components of the system/apparatus 1200. The one or more processors 1202 may, for example, comprise a general-purpose processor. The one or more processors 1202 may be a single core device or a multiple core device. The one or more processors 1202 may comprise a Central Processing Unit (CPU) or a graphical processing unit (GPU). Alternatively, the one or more processors 1202 may comprise specialised processing hardware, for instance a RISC processor or programmable hardware with embedded firmware. Multiple processors may be included.

The system/apparatus comprises a working or volatile memory 1204. The one or more processors may access the volatile memory 1204 in order to process data and may control the storage of data in memory. The volatile memory 1204 may comprise RAM of any type, for example Static RAM (SRAM), Dynamic RAM (DRAM), or it may comprise Flash memory, such as an SD-Card.

The system/apparatus comprises a non-volatile memory 1206. The non-volatile memory 1206 stores a set of operation instructions 1208 for controlling the operation of the processors 1202 in the form of computer readable instructions. The non-volatile memory 1206 may be a memory of any kind such as a Read Only Memory (ROM), a Flash memory or a magnetic drive memory.

The one or more processors 1202 are configured to execute operating instructions 1208 to cause the system/-apparatus to perform any of the methods described herein. The operating instructions 1208 may comprise code (i.e. drivers) relating to the hardware components of the system/apparatus 1200, as well as code relating to the basic operation of the system/apparatus 1200. Generally speaking, the one or more processors 1202 execute one or more instructions of the operating instructions 808, which are stored permanently or semi-permanently in the non-volatile memory 806, using the volatile memory 1204 to store temporarily data generated during execution of said operating instructions 1208.

Implementations of the methods described herein may be realised as in digital electronic circuitry, integrated circuitry, specially designed ASICs (application specific integrated circuits), computer hardware, firmware, software, and/or combinations thereof. These may include computer program products (such as software stored on e.g. magnetic discs, optical disks, memory, Programmable Logic Devices) comprising computer readable instructions that, when executed by a computer, such as that described in relation to Figure 12, cause the computer to perform one or more of the methods described herein.

Any system feature as described herein may also be provided as a method feature, and vice versa. As used herein, means plus function features may be expressed alternatively in terms of their corresponding structure. In particular, method aspects may be applied to system aspects, and vice versa.

Furthermore, any, some and/or all features in one aspect can be applied to any, some and/or all features in any other aspect, in any appropriate combination. It should also be appreciated that particular combinations of the various features described and defined in any aspects of the invention can be implemented and/or supplied and/or used independently.

Although several embodiments have been shown and described, it would be appreciated by those skilled in the art that changes may be made in these embodiments without departing from the principles of this disclosure, the scope of which is defined in the claims.

**Claims**

1. A computer implemented method (200) of estimating a three-dimensional flow of an object (108) between a first two-dimensional image ($I_1$, 104) comprising an image of the object (108) in a first configuration and a second two-dimensional image ($I_2$, 106) comprising an image of the object (108) in a second configuration, the method comprising:

   inputting (2.1) the first image two-dimensional, the second image two-dimensional and a two-dimensional representation of an estimated three-dimensional shape of the object (108) into a convolutional neural network (102); and
   generating (2.2), using the convolutional neural network (102), the three-dimensional flow of the object (108) between the first two-dimensional image ($I_1$, 104) and the second two-dimensional image ($I_2$, 106) from the first two-dimensional image ($I_1$, 104), the second two-dimensional image ($I_2$, 106) and the two-dimensional representation of the estimated three-dimensional shape of the object (108),
   wherein the method further comprising generating, using a further neural network, the two-dimensional representation of the estimated three-dimensional shape of the object (108) from the first image prior to inputting the two-dimensional representation of the estimated three-dimensional shape of the object (108) into the convolutional neural network (102).

2. The method of claim 1, wherein the two-dimensional representation of the estimated three-dimensional shape of the object (108) comprises a colour image, wherein pixels of the colour image encode three dimensional coordinates of points in the estimated three-dimensional shape of the object (108) that correspond to pixels of the object (108) in the first two-dimensional image (I1, 104).

3. The method of any of claims 1 or 2 wherein the two-dimensional representation of the estimated three-dimensional shape of the object comprises a projected normalised coordinates code.

4. The method of any preceding claim, wherein the three-dimensional flow of the object between a first two-dimensional image ($I_1$, 104) and the second two-dimensional image ($I_2$, 106) comprises a colour image encoding a three-dimensional flow of pixels between the first two-dimensional image (I1, 104) and the second two-dimensional image ($I_2$, 106).

5. The method of any preceding claim, wherein the convolutional neural network (102) comprises:

a first input branch (516) configured to process the first two-dimensional image (I1, 104) through one or more convolutional layers;

a second input branch (516) configured to process the second two-dimensional image through one or more convolutional layers;

a third input branch (516) configured to process the two-dimensional representation of the estimated three-dimensional shape of the object (108) through one or more convolutional layers; and

a trunk network (518) configured to jointly process output derived from the first input branch (516), the second input branch (516) and the third input branch (516) through a plurality of convolutional layers.

6. The method of claim 5, wherein the convolutional neural network (102) further comprises a correlation layer configured to correlate output of the first branch (516) and output of the second branch (516) prior to processing by the trunk network (518).

7. The method of any of claims 5 or 6, wherein the trunk network comprises:

an encoding section (512) configured to generate a coarse feature map from the output derived from the first input branch, the second input branch and the third input branch using a plurality of convolutional layers; and

a decoding section (514) configured to generate the three-dimensional flow of the object (108) between a first two-dimensional image ($I_1$, 104) and the second two-dimensional image ($I_2$, 106) from the coarse feature map using a plurality of deconvolutional layers.

8. The method of any preceding claim, wherein the object (108) is a face.

9. A system comprising one or more processors and a memory, the memory comprising computer readable code that, when executed by the one or more processors, causes the system to perform the method of any of claims 1-8.

10. A computer program product comprising computer readable code that, when executed by computing apparatus, causes the computing apparatus to perform the method of any of claims 1-8.

**Patentansprüche**

1. Computerimplementiertes Verfahren (200) zum Schätzen eines dreidimensionalen Flusses eines Objekts (108) zwischen einem ersten zweidimensionalen Bild ($I_1$, 104), das ein Bild des Objekts (108) in einer ersten Konfiguration umfasst, und einem zweiten zweidimensionalen Bild ($I_2$, 106), das ein Bild des Objekts (108) in einer zweiten Konfiguration umfasst, wobei das Verfahren umfasst:

Eingeben (2.1) des ersten Bildes zweidimensional, des zweiten Bildes zweidimensional und einer zweidimensionalen Darstellung einer geschätzten dreidimensionalen Form des Objekts (108) in ein faltendes neuronales Netzwerk (102); und

Erzeugen (2.2), unter Verwendung des faltenden neuronalen Netzwerks (102), des dreidimensionalen Flusses des Objekts (108) zwischen dem ersten zweidimensionalen Bild ($I_1$, 104) und dem zweiten zweidimensionalen Bild ($I_2$, 106) aus dem ersten zweidimensionalen Bild ($I_1$, 104), dem zweiten zweidimensionalen Bild ($I_2$, 106) und der zweidimensionalen Darstellung der geschätzten dreidimensionalen Form des Objekts (108),

wobei das Verfahren ferner ein Erzeugen, unter Verwendung eines weiteren neuronalen Netzwerks, der zweidimensionalen Darstellung der geschätzten dreidimensionalen Form des Objekts (108) aus dem ersten Bild, bevor die zweidimensionale Darstellung der geschätzten dreidimensionalen Form des Objekts (108) in das faltende neuronale Netzwerk (102) eingegeben wird, umfasst.

2. Verfahren nach Anspruch 1, wobei die zweidimensionale Darstellung der geschätzten dreidimensionalen Form des Objekts (108) ein Farbbild umfasst, wobei Pixel des Farbbildes dreidimensionale Koordinaten von Punkten in der geschätzten dreidimensionalen Form des Objekts (108), die Pixeln des Objekts (108) in dem ersten zweidimensionalen Bild (11, 104) entsprechen, codieren.

3. Verfahren nach einem der Ansprüche 1 oder 2, wobei die zweidimensionale Darstellung der geschätzten dreidimensionalen Form des Objekts einen projizierten normalisierten Koordinatencode umfasst.

4. Verfahren nach einem der vorstehenden Ansprüche, wobei der dreidimensionale Fluss des Objekts zwischen einem

ersten zweidimensionalen Bild ($I_1$, 104) und dem zweiten zweidimensionalen Bild ($I_2$, 106) ein Farbbild, das einen dreidimensionalen Pixelfluss zwischen dem ersten zweidimensionalen Bild (11, 104) und dem zweiten zweidimensionalen Bild ($I_2$, 106) codiert, umfasst.

5. Verfahren nach einem der vorstehenden Ansprüche, wobei das faltende neuronale Netzwerk (102) umfasst:

einen ersten Eingabezweig (516), der konfiguriert ist, um das erste zweidimensionale Bild (11, 104) über eine oder mehrere faltende Schichten zu verarbeiten;
einen zweiten Eingabezweig (516), der konfiguriert ist, um das zweite zweidimensionale Bild über eine oder mehrere faltende Schichten zu verarbeiten;
einen dritten Eingabezweig (516), der konfiguriert ist, um die zweidimensionale Darstellung der geschätzten dreidimensionalen Form des Objekts (108) über eine oder mehrere faltende Schichten zu verarbeiten; und
ein Stammnetzwerk (518), das konfiguriert ist, um eine von dem ersten Eingabezweig (516), dem zweiten Eingabezweig (516) und dem dritten Eingabezweig (516) abgeleitete Ausgabe gemeinsam über eine Vielzahl von faltenden Schichten zu verarbeiten.

6. Verfahren nach Anspruch 5, wobei das faltende neuronale Netzwerk (102) ferner eine Korrelationsschicht umfasst, die konfiguriert ist, um eine Ausgabe des ersten Zweigs (516) und eine Ausgabe des zweiten Zweigs (516) vor dem Verarbeiten durch das Stammnetzwerk (518) zu korrelieren.

7. Verfahren nach einem der Ansprüche 5 oder 6, wobei das Stammnetzwerk umfasst:

einen Codierungsabschnitt (512), der konfiguriert ist, um aus der von dem ersten Eingabezweig, dem zweiten Eingabezweig und dem dritten Eingabezweig abgeleiteten Ausgabe unter Verwendung einer Vielzahl von faltenden Schichten eine grobe Merkmalskarte zu erzeugen; und
einen Decodierungsabschnitt (514), der konfiguriert ist, um den dreidimensionalen Fluss des Objekts (108) zwischen einem ersten zweidimensionalen Bild ($I_1$, 104) und dem zweiten zweidimensionalen Bild ($I_2$, 106) aus der groben Merkmalskarte unter Verwendung einer Vielzahl von entfaltenden Schichten zu erzeugen.

8. Verfahren nach einem der vorstehenden Ansprüche, wobei das Objekt (108) ein Gesicht ist.

9. System, das einen oder mehrere Prozessoren und einen Speicher umfasst, wobei der Speicher computerlesbaren Code umfasst, der, wenn er durch den einen oder die mehreren Prozessoren ausgeführt wird, das System veranlasst, das Verfahren nach einem der Ansprüche 1 bis 8 durchzuführen.

10. Computerprogrammprodukt, das computerlesbaren Code umfasst, der, wenn er durch eine Rechenvorrichtung ausgeführt wird, die Rechenvorrichtung veranlasst, das Verfahren nach einem der Ansprüche 1 bis 8 durchzuführen.

**Revendications**

1. Procédé (200) mis en œuvre par ordinateur consistant à estimer un flux tridimensionnel d'un objet (108) entre une première image bidimensionnelle ($I_1$, 104) comprenant une image de l'objet (108) dans une première configuration et une seconde image bidimensionnelle ($I_2$, 106) comprenant une image de l'objet (108) dans une seconde configuration, le procédé comprenant :

l'entrée (2.1) de la première image bidimensionnelle, de la seconde image bidimensionnelle et d'une représentation bidimensionnelle d'une forme tridimensionnelle estimée de l'objet (108) dans un réseau neuronal convolutif (102) ; et
la génération (2.2), à l'aide du réseau neuronal convolutif (102), du flux tridimensionnel de l'objet (108) entre la première image bidimensionnelle ($I_1$, 104) et la seconde image bidimensionnelle ($I_2$, 106) à partir de la première image bidimensionnelle ($I_1$, 104), de la seconde image bidimensionnelle ($I_2$, 106) et de la représentation bidimensionnelle de la forme tridimensionnelle estimée de l'objet (108),
dans lequel le procédé comprenant en outre la génération, à l'aide d'un autre réseau neuronal, de la représentation bidimensionnelle de la forme tridimensionnelle estimée de l'objet (108) à partir de la première image avant l'entrée de la représentation bidimensionnelle de la forme tridimensionnelle estimée de l'objet (108) dans le réseau neuronal convolutif (102).

**2.** Procédé selon la revendication 1, dans lequel la représentation bidimensionnelle de la forme tridimensionnelle estimée de l'objet (108) comprend une image couleur, dans lequel des pixels de l'image couleur codent des coordonnées tridimensionnelles de points dans la forme tridimensionnelle estimée de l'objet (108) qui correspondent aux pixels de l'objet (108) dans la première image bidimensionnelle (11, 104).

**3.** Procédé selon l'une quelconque des revendications 1 ou 2, dans lequel la représentation bidimensionnelle de la forme tridimensionnelle estimée de l'objet comprend un code de coordonnées normalisées projetées.

**4.** Procédé selon l'une quelconque revendication précédente, dans lequel le flux tridimensionnel de l'objet entre une première image bidimensionnelle ($I_1$, 104) et la seconde image bidimensionnelle ($I_2$, 106) comprend une image couleur codant un flux tridimensionnel de pixels entre la première image bidimensionnelle (11, 104) et la seconde image bidimensionnelle ($I_2$, 106).

**5.** Procédé selon l'une quelconque revendication précédente, dans lequel le réseau neuronal convolutif (102) comprend :

> une première branche d'entrée (516) configurée pour traiter la première image bidimensionnelle (11, 104) par l'intermédiaire d'une ou plusieurs couches convolutives ;
> une deuxième branche d'entrée (516) configurée pour traiter la seconde image bidimensionnelle par l'intermédiaire d'une ou plusieurs couches convolutives ;
> une troisième branche d'entrée (516) configurée pour traiter la représentation bidimensionnelle de la forme tridimensionnelle estimée de l'objet (108) par l'intermédiaire d'une ou plusieurs couches convolutives ; et
> un réseau principal (518) configuré pour traiter conjointement la sortie dérivée de la première branche d'entrée (516), de la deuxième branche d'entrée (516) et de la troisième branche d'entrée (516) par l'intermédiaire d'une pluralité de couches convolutives.

**6.** Procédé selon la revendication 5, dans lequel le réseau neuronal convolutif (102) comprend en outre une couche de corrélation configurée pour corréler la sortie de la première branche (516) et la sortie de la seconde branche (516) avant le traitement par le réseau principal (518).

**7.** Procédé selon l'une quelconque des revendications 5 ou 6, dans lequel le réseau principal comprend :

> une section de codage (512) configurée pour générer une carte de caractéristiques grossières à partir de la sortie dérivée de la première branche d'entrée, de la deuxième branche d'entrée et de la troisième branche d'entrée à l'aide d'une pluralité de couches convolutives ; et
> une section de décodage (514) configurée pour générer le flux tridimensionnel de l'objet (108) entre une première image bidimensionnelle ($I_1$, 104) et la seconde image bidimensionnelle ($I_2$, 106) à partir de la carte de caractéristiques grossières à l'aide d'une pluralité de couches déconvolutives.

**8.** Procédé selon l'une quelconque revendication précédente, dans lequel l'objet (108) est un visage.

**9.** Système comprenant un ou plusieurs processeurs et une mémoire, la mémoire comprenant un code lisible par ordinateur qui, lorsqu'il est exécuté par le ou les processeurs, amène le système à réaliser le procédé selon l'une quelconque des revendications 1 à 8.

**10.** Produit-programme informatique, comprenant un code lisible par ordinateur, qui, lorsqu'il est exécuté par un appareil informatique, amène l'appareil informatique à réaliser le procédé selon l'une quelconque des revendications 1 à 8.

FIG. 1

200

| Input a first two-dimensional image, a second two-dimensional image and a two-dimensional representation of an estimated three-dimensional shape of an object in the first image into a CNN | 2.1 |

| Generate, using the CNN, a three-dimensional flow of the object between the first two-dimensional image and the second two-dimensional image from the first two-dimensional image, the second two-dimensional image and the two-dimensional representation of the estimated three-dimensional shape of the object | 2.2 |

FIG.2

FIG. 3

400

Generate, using a further neural network, an estimated three-dimensional shape of an object from a first image ⟋ 4.1

Encode three dimensional coordinates of points in the estimated three-dimensional shape in a two-dimensional image to generate a two-dimensional representation of an estimated three-dimensional shape of the object ⟋ 4.2

Input the first two-dimensional image, a second two-dimensional image and the two-dimensional representation of an estimated three-dimensional shape of an object in the first image into a CNN ⟋ 4.3

Generate, using the CNN, a three-dimensional flow of the object between the first two-dimensional image and the second two-dimensional image from the first two-dimensional image, the second two-dimensional image and the two-dimensional representation of the estimated three-dimensional shape of the object ⟋ 4.4

FIG.4

FIG. 5

FIG. 6

FIG. 7

EP 4 128 154 B1

FIG. 8

900

Input a first two-dimensional image, a second two-dimensional image and a two-dimensional representation of an estimated three-dimensional shape of an object in the first image into a CNN — 9.1

Generate, using the CNN, a three-dimensional flow of the object between the first two-dimensional image and the second two-dimensional image from the first two-dimensional image, the second two-dimensional image and the two-dimensional representation of the estimated three-dimensional shape of the object — 9.2

Compare the generated three-dimensional flow to a ground truth three-dimensional flow between the first two-dimensional image and the second two-dimensional image using a loss function. — 9.3

Updating parameters of the neural network based on the comparison — 9.4

FIG. 9

EP 4 128 154 B1

FIG. 10

FIG.11

26

1200

1204

Volatile memory

1202

Processor arrangement

1206

Non-volatile memory

1208  O.I.

FIG. 12

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- GeoNet: Unsupervised Learning of Dense Depth, Optical Flow and Camera Pose. **ZHICHAO YIN et al.** ARXIV.ORG, CORNELL UNIVERSITY LIBRARY. OLIN LIBRARY CORNELL UNIVERSITY, 06 March 2018, vol. 201

- **P. FISCHER et al.** FlowNet: Learning Optical Flow with Convolutional Networks. *Proceedings of the IEEE international conference on computer vision*, 2015, 2758-2766
- **S. ZAFEIRIOU et al.** The 3d menpo facial landmark tracking challenge''. *Proceedings of the IEEE International Conference on Computer Vision*, 2017, 2503-2511